# EUROPEAN PATENT APPLICATION

(11) **EP 2 157 441 A1**
(43) Date of publication of application: **24.02.2010**
(21) Application number: 08765246.7
(22) Date of filing: 06.06.2008
(51) Int. Cl.: G01S 7/48, G02B 26/10

(54) **OPTICAL SCANNING TYPE SENSOR**

(30) Priority: 12.06.2007 JP 2007155436
(71) Applicant: NHK Spring Co., Ltd., Yokohama-shi, Kanagawa 236-0004 (JP)
(72) Inventor: SHIGEMATSU, Ryohei, Yokohama-shi Kanagawa 236-0004 (JP); IMAMURA, Hiroshi, Yokohama-shi Kanagawa 236-0004 (JP); HIRATA, Takafumi, Yokohama-shi Kanagawa 236-0004 (JP)
(74) Representative: HOFFMANN EITLE
(86) International application number: PCT/JP2008/060433
(87) International publication number: WO 2008/152979

(57) **Abstract**

To provide an optical scanning sensor (1) which performs an object detection with high accuracy by suppressing the mutual interference between scanning light and reflection light, the optical scanning sensor (1) comprises a light projecting unit (2, 5) that projects light, an optical scanning actuator (3) that emits the light from the light projecting unit (2, 5) via a reflecting mirror (33) and performs scanning with the light emitted by causing the mirror (33) to swing, and a light receiving unit (4, 6) that receives, via the mirror (33), reflection light by an external object of scanning light emitted by the optical scanning actuator (3). The mirror (33) includes a first surface (33a) that reflects the light projected by the light projecting unit (2, 5) and emits the light reflected outward as the scanning light, and a second surface (33b) that is parallel to and discontinuous in a reflection area with the first surface (33a) and reflects and emits the reflection light to the light receiving unit (4, 6).

## Description

### TECHNICAL FIELD

The present invention relates to an optical scanning sensor that performs scanning with emitted light and receives reflection light of scanned light by an external object to detect the object.

### BACKGROUND ART

Conventionally, an optical scanning apparatus that performs scanning with light such as a laser light has been used in various fields such as a radar, a scanner, a printer, and a printing marker. As a technology for realizing such an optical scanning apparatus, there is known a technology in which one movable mirror is driven to swing or perform a rotation movement by a motor, light from a predetermined light source is emitted toward the movable mirror, and the movable mirror reflects the emitted light to thereby perform scanning with light (for example, see Patent Document 1). When this technology is applied to detection of an object, the movable mirror has a function of reflecting reflection light of scanning light by an external object and emitting the reflection light to a predetermined light receiving unit.

Patent Document 1: International Publication Pamphlet No. WO 02/008818

### DISCLOSURE OF INVENTION

### PROBLEM TO BE SOLVED BY THE INVENTION

However, in the above conventional technology, because emission of the scanning light to the outside and emission of the reflection light to the light receiving unit are performed by using the same movable mirror, the mutual interference may occur between the scanning light and the reflection light. Consequently, detection accuracy of an object may be also affected.

The present invention has been achieved in view of the above, and it is an object of the present invention to provide an optical scanning sensor that is capable of suppressing the mutual interference between scanning light and reflection light and performing an object detection with high accuracy.

### MEANS FOR SOLVING PROBLEM

To overcome the problems and achieve the object mentioned above, according to the present invention, an optical scanning sensor comprises:
a light projecting unit that projects light;
an optical scanning actuator that emits the light projected by the light projecting unit via a mirror for reflecting the light and performs scanning with the light emitted by causing the mirror to swing; and
a light receiving unit that receives, via the mirror, reflection light by an external object of scanning light emitted by the optical scanning actuator, wherein
the mirror includes
   a first surface that reflects the light projected by the light projecting unit and emits the light reflected outward as the scanning light; and
   a second surface that is parallel to and discontinuous in a reflection area with the first surface and reflects and emits the reflection light to the light receiving unit.

Further, in the optical scanning sensor according to the present invention, the first surface and the second surface are arranged side by side along a direction orthogonal to a direction in which the mirror swings.

Furthermore, in the optical scanning sensor according to the present invention, the light projecting unit opposes to the first surface and the light receiving unit opposes to the second surface.

Still further, in the optical scanning sensor according to the present invention, the optical scanning sensor further comprises a mutual interference suppressing unit that is provided between the light projecting unit and the light receiving unit and suppresses a mutual interference between the scanning light and the reflection light.

Still further, in the optical scanning sensor according to the present invention, the first surface and the second surface are coplanar without a step.

Still further, in the optical scanning sensor according to the present invention, a distance between the light projecting unit and the first surface is smaller than a distance between the light receiving unit and the second surface.

Still further, in the optical scanning sensor according to the present invention, the optical scanning actuator includes
a movable unit that supports the mirror and is movable together with the mirror;
a plurality of leaf springs which has a thin plate shape and of which one end portion in a longitudinal direction is fixed and another end portion in the longitudinal direction is attached to the movable unit; and
an electromagnetic driving unit that includes a magnet that generates a magnetic flux, a yoke that is laminated in part on the magnet and forms a closed magnetic circuit together with the magnet, and a coil that is held by the movable unit, is positioned in a gap between the magnet and the yoke, and includes an opening plane being substantially orthogonal to a laminating direction of the magnet and the yoke, and drives the movable unit by an electromagnetic force applied to the coil.

Still further, in the optical scanning sensor according to the present invention, the coil has a flat shape in which a height in a direction orthogonal to the opening plane is smaller than an arbitrary width in a direction parallel to the opening plane.

Still further, in the optical scanning sensor according to the present invention, the yoke includes two arc-shaped portions having two surfaces which are disposed in parallel so as to oppose to each other and have a semi-circular ring shape, and the mirror is movable in a neighborhood of an outer edge of the arc-shaped portions along the outer edge.

Still further, in the optical scanning sensor according to the present invention, the magnet includes a surface that has a semi-circular ring shape substantially identical to the surfaces of the arc-shaped portions included in the yoke, and is laminated and fixed to a surface of one arc-shaped portion out of the two arc-shaped portions, the surface opposing to another arc-shaped portion.

Still further, in the optical scanning sensor according to the present invention, the leaf springs are arranged in parallel, and surfaces thereof that correspond to each other pass through a same plane and longitudinal directions thereof are substantially in parallel with each other in a state where each of the leaf springs is not deflected, and the magnet, the yoke, and the coil are positioned between any adjacent two leaf springs out of the leaf springs.

### EFFECT OF THE INVENTION

According to the present invention, it is possible to provide an optical scanning sensor in which a mirror, which is included in an optical scanning actuator that performs scanning with light, includes a first surface that emits light projected by a light projecting unit outward as scanning light, and a second surface that is parallel to the first surface and discontinuous in a reflection area with the first surface and reflects the reflection light of the light emitted from the first surface to a light receiving unit, thereby enabling to suppress the mutual interference between scanning light and reflection light and to perform an object detection with high accuracy.

### BRIEF DESCRIPTION OF DRAWINGS

[Fig. 1] Fig. 1 is a perspective view illustrating a configuration of a main part of an optical scanning sensor according to an embodiment of the present invention.
[Fig. 2] Fig. 2 is a plan view of the optical scanning sensor as seen from an arrow A direction in Fig. 1.
[Fig. 3] Fig. 3 is a diagram schematically illustrating a functional configuration of an object detecting apparatus that includes the optical scanning sensor according to the embodiment of the present invention.
[Fig. 4] Fig. 4 is a diagram explaining an operation of the optical scanning actuator.

### EXPLANATIONS OF LETTERS OR NUMERALS

- 1: optical scanning sensor
- 2: light projecting element
- 3: optical scanning actuator
- 4: light receiving element
- 5: light projecting lens
- 6: focusing lens
- 7: holding member
- 8: light shielding plate
- 9: oscillator circuit
- 10: light receiving circuit
- 11: control circuit
- 31a,: 31b leaf spring
- 32: fixing member
- 33: mirror
- 33a: first surface
- 33b: second surface
- 33c: opening portion
- 34: yoke
- 34a, 34b: arc-shaped portion
- 34c: coupling portion
- 35: magnet
- 36: coil
- 37: screw member
- 38: base member
- 39: frame member
- 39a: leaf spring attaching portion
- 39b: mirror supporting portion
- 39c: coil placing portion
- 40: moving amount detecting unit
- 100: object detecting apparatus
- 311a, 311b: electrode terminal portion
- 312a, 312b: notched portion

### BEST MODE(S) FOR CARRYING OUT THE INVENTION

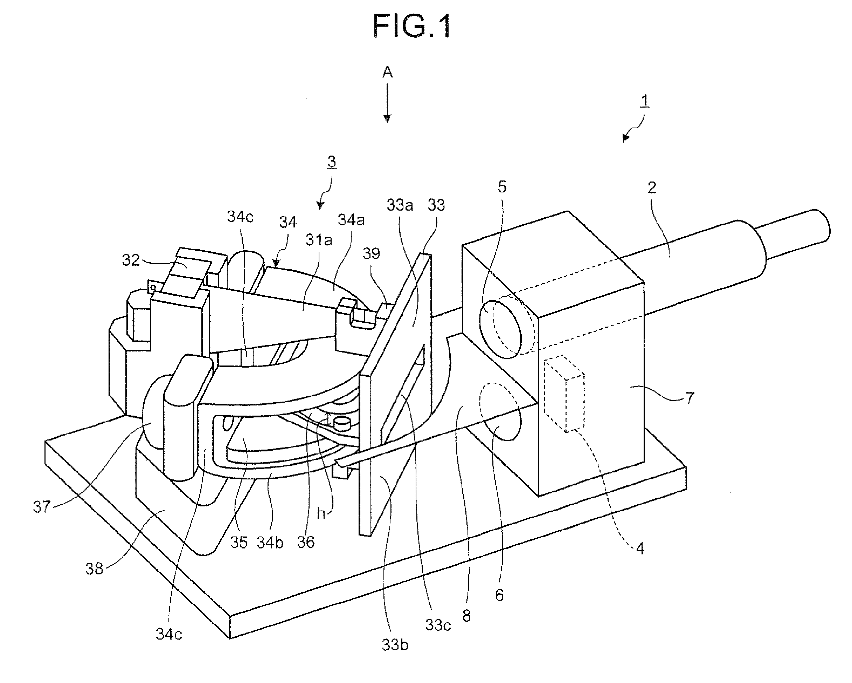

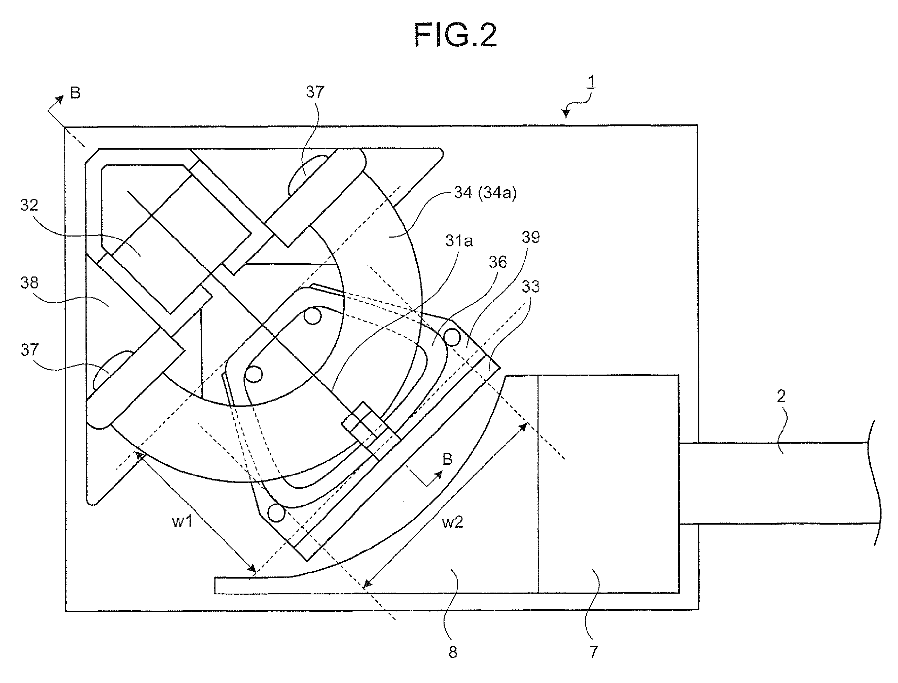

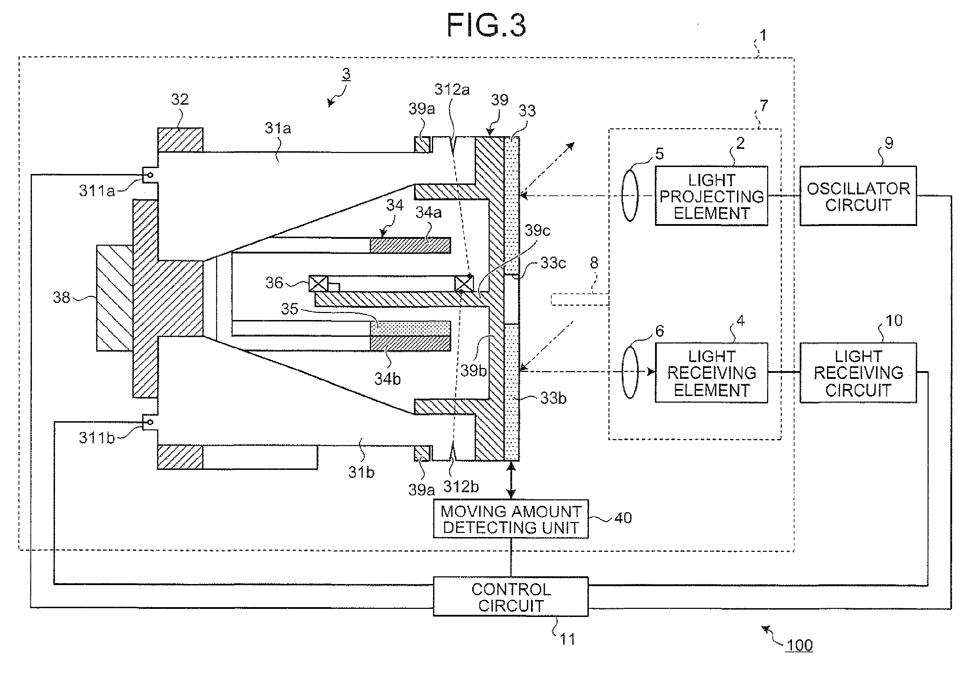

Preferred embodiments for carrying out the present invention (hereinafter, "embodiments") will be explained below with reference to the accompanying drawings. Fig. 1 is a diagram illustrating a configuration of a main part of an optical scanning sensor according to an embodiment of the present invention. Fig. 2 is a plan view as seen from an arrow A direction in Fig. 1. Furthermore, Fig. 3 is a diagram schematically illustrating a functional configuration of an object detecting apparatus that includes the optical scanning sensor according to the embodiment and detects an object in a predetermined range.

An optical scanning sensor 1 includes a light projecting element 2 that projects light, an optical scanning actuator 3 that emits the light projected by the light projecting element 2 and performs scanning in a predetermined range, and a light receiving element 4 that receives reflection light of scanning light that is reflected by an external object and is returned via the optical scanning actuator 3. The light projecting element 2 is, for example, a laser diode, and the light receiving element 4 is, for example, a photodiode.

The optical scanning sensor 1 includes a light projecting lens 5 that emits light projected by the light projecting element 2 to the optical scanning actuator 3 as a beam, a focusing lens 6 that focuses reflection light from outside that is propagated via the optical scanning actuator 3, and a holding member 7 that houses and holds the light projecting element 2 and the light receiving element 4. The light projecting lens 5 and the focusing lens 6 are disposed on a surface of the holding member 7, so that they are exposed, in a state of aligning along an upward or downward direction of the holding member 7 (upward or downward direction in Fig. 1). The light projecting element 2 and the light projecting lens 5 constitute a projecting unit, and the light receiving element 4 and the focusing lens 6 constitute a light receiving unit.

As shown in Fig. 1, on the surface on which the light projecting lens 5 and the focusing lens 6 are disposed so that they are exposed among surfaces of the holding member 7, a light shielding plate 8 is provided that extends from the middle position between the light projecting lens 5 and the focusing lens 6 in a direction that is orthogonal to the surface and is toward the optical scanning actuator 3. The light shielding plate 8 has a shape not to come into contact with a mirror 33 included in the optical scanning actuator 3. More specifically, the light shielding plate 8 has a thin reed-like shape including an edge portion having a substantially circular indentation. The light shielding plate 8 having such a configuration has a function of suppressing the mutual interference between scanning light and reflection light and constitutes a mutual interference suppressing unit.

The optical scanning actuator 3 includes two leaf springs 31a and 31b, a fixing member 32 that fixes each base end portion of the leaf springs 31a and 31b, the mirror 33 as an optical element that reflects light projected by the light projecting element 2 and emits the reflected light, a yoke 34 and a magnet 35 that form a closed magnetic circuit, a coil 36 that is arranged in a gap between the yoke 34 and the magnet 35, a base member 38 which holds the fixing member 32 and to which the yoke 34 is fixed via screw members 37, a frame member 39 that constitutes a movable unit capable of moving together with the mirror 33, and a moving amount detecting unit 40 that detects a moving amount of a predetermined point of the optical scanning actuator 3 from an initial state (a state in which the leaf springs 31a and 31b are not deflected). The optical scanning actuator 3 shown in Fig. 3 corresponds to a partial cross section taken along line B-B in Fig. 2.

The leaf springs 31a and 31b have the same shape and are arranged in parallel, and the surfaces thereof that correspond to each other pass through the same plane and longitudinal directions thereof are in parallel in the initial state. Each of the leaf springs 31a and 31b becomes gradually narrow in width toward the deflectable tip portion from the base end portion fixed by the fixing member 32. Therefore, a stress distribution of the leaf springs 31a and 31b that function as cantilevers can be made approximately even, and a space in which the yoke 34, the magnet 35, and the coil 36 are arranged can be efficiently ensured. Because the leaf springs 31a and 31b are arranged such that the yoke 34, the magnet 35, and the coil 36 are disposed between the leaf springs 31a and 31b along an upward or downward direction in Fig. 3, the stiffness in a direction in which the mirror 33 swings is high, so that they are less susceptible to disturbances.

An electrode terminal portion 311a is provided at the base end portion of the leaf spring 31a, which projects from the base end portion along the longitudinal direction of the leaf spring 31a in the initial state and to which a wire that connects to a control circuit 11 that generates current flowing in the coil 36 is attached. A notched portion 312a is provided at the tip portion of the leaf spring 31a, which is notched in a direction substantially orthogonal to the longitudinal direction of the leaf spring 31a in the initial state and to which one end of the coil 36 is hooked to ensure energization with the coil 36. The leaf spring 31b includes an electrode terminal portion 311b and a notched portion 312b in the similar manner to the leaf spring 31a.

The leaf springs 31a and 31b having the above configuration are connected to the control circuit 11 via the wires that are connected to the electrode terminal portions 311a and 311b, respectively, and are connected to one end of the coil 36 via notched portions 312a and 312b, respectively. Thereby, the control circuit 11 and the coil 36 are electrically connected, so that current can flow in the coil 36. In Fig. 3, the connection of the winding end portion of the coil 36 and the notched portions 312a and 312b is shown by dotted lines.

The leaf springs 31a and 31b are made of a thin leaf spring material such as beryllium copper, phosphor bronze, or stainless steel, and are formed by a blanking shaping by press work or an etching shaping. It is possible to apply a polymer sheet or the like having viscoelasticity on the surfaces of the leaf springs 31a and 31b. Whereby, an appropriate damping effect can be applied to the frame member 39, so that breakage of the apparatus itself at resonance or induction of unnecessary vibration due to input of disturbances can be suppressed and it is not needed to generate a large braking force to the coil 36 at a returning position of a swinging movement. Therefore, power saving of the optical scanning actuator 3 can be achieved and a good responsiveness can be realized.

The fixing member 32 is formed by injection molding of engineering plastic such as liquid crystal polymer (LCP) filled with a light-weight and high stiffness glass fiber or the like or polyphenylene sulfide (PPS).

The mirror 33 includes a first surface 33a that reflects light projected by the light projecting element 2 and emits the light outward and a second surface 33b that is parallel to and coplanar with the first surface 33a and reflects the reflection light to emit to the light receiving element 4. The first surface 33a and the second surface 33b are arranged side by side along a direction (upward or downward direction in Figs. 1 and 3) orthogonal to a direction in which the mirror 33 swings. The first surface 33a opposes the light projecting lens 5 and the second surface 33b opposes the focusing lens 6.

An opening portion 33c is formed between the first surface 33a and the second surface 33b of the mirror 33. Therefore, the reflection areas of the first surface 33a and the second surface 33b are discontinuous. Because the mirror 33 includes the opening portion 33c, the propagation of scanning light and reflection light to an area in which the mutual interference is apt to occur can be significantly reduced. Thus, the mutual interference between scanning light and reflection light can be suppressed.

The mirror 33 is realized by using glass, synthetic resin, or light metal such as an aluminum, and is supported by the frame member 39 so that the surface (mirror surface) thereof is orthogonal to the longitudinal direction of the leaf springs 31a and 31b in the initial state. A reflection layer that is formed to be smooth by aluminum deposition or the like is provided on the surface of the mirror 33. On the surface of the reflection layer, a protection layer, which is formed by a thin film of, for example, a silicon dioxide (SiO₂) for protecting the surface from corrosion, oxidation, and the like, is provided. In the present embodiment, because the surface of the mirror 33 is coplanar, the mirror 33 is easily formed.

The yoke 34 includes two arc-shaped portions 34a and 34b, having surfaces which are disposed apart in parallel so as to oppose to each other and have the same semi-circular ring shape with each other. The yoke 34 further includes two coupling portions 34c that couple opposing end portions of the arc-shaped portions 34a and 34b, and has a closed shape as a whole. The coupling portions 34c are fixed to the base member 38 via the screw members 37. The yoke 34 having such a configuration is made of a soft magnetic material such as pure iron and forms a closed magnetic circuit together with the magnet 35.

The magnet 35 has a thin-plate shape including a surface substantially identical to the arc-shaped portions 34a and 34b of the yoke 34, and is fixed to the yoke 34 in a state of being laminated on the surface of the arc-shaped portion 34b positioned on the lower side that opposes to the arc-shaped portion 34a.

The coil 36 is held by the frame member 39 and is positioned in the gap between the arc-shaped portion 34a of the yoke 34 and the magnet 35. More specifically, the coil 36 is arranged at a position at which the opening plane thereof is orthogonal to a laminating direction of the yoke 34 and the magnet 35, i.e., at a position that crosses the magnetic flux formed by the yoke 34 and the magnet 35 at a right angle.

The opening plane of the coil 36 has an substantially isosceles trapezoid shape, of which short side is positioned on the inner peripheral side of the arc-shaped portions 34a and 34b and long side is positioned on the outer peripheral side of the arc-shaped portions 34a and 34b. The coil 36 including the opening plane having such a shape is arranged in the above manner, so that the movement of the frame member 39 at the inner peripheral side with a small diameter can be made smooth. Moreover, a cross section area of the outer peripheral side with a large diameter is made large, so that a large amount of the magnetic flux can cross the coil 36, enabling to generate a driving force necessary for the movement of the frame member 39.

The coil 36 has a flat shape in which at least a height (h in Fig. 1) in a direction orthogonal to the opening plane is smaller than an arbitrary width (for example, w1 and w2 in Fig. 2) in a direction parallel to the opening plane. Because the coil 36 has such a flat shape, the gap between the yoke 34 and the magnet 35 can be made small, enabling to have a configuration appropriate for space saving and size reduction.

The yoke 34, the magnet 35, and the coil 36 constitute an electromagnetic driving unit that drives the frame member 39 constituting the movable unit by electromagnetic force and performs scanning with light emitted by the mirror 33.

The frame member 39 includes leaf spring attaching portions 39a to which the tip portions of the leaf springs 31a and 31b are attached, a mirror supporting portion 39b that supports the mirror 33, and a coil placing portion 39c at which the coil 36 is placed. As shown in Fig. 3, an extending direction (upward or downward direction in Fig. 3) of the mirror supporting portion 39b is orthogonal to an extending direction (right or left direction in Fig. 3) of the coil placing portion 39c. The frame member 39 is realized by using engineering plastic or the like in the similar manner to the fixing member 32.

When the leaf springs 31a and 31b are attached to the fixing member 32 and the frame member 39, the leaf springs 31a and 31b, the fixing member 32 and/or the frame member 39 can be formed integrally, using the leaf springs 31a and 31b as inserting members.

As shown in Fig. 3, in addition to the optical scanning sensor 1, an object detecting apparatus 100 includes an oscillator circuit 9 that oscillates the light projecting element 2, a light receiving circuit 10 that photoelectrically converts light that the light receiving element 4 receives via the focusing lens 6 and outputs it, and the control circuit 11 that controls the optical scanning actuator 3, the oscillator circuit 9, and the light receiving circuit 10.

In the object detecting apparatus 100 having the above configuration, the control circuit 11 causes current to flow in the coil 36, thereby changing the magnetic flux penetrating the opening plane of the coil 36. Consequently, the Lorentz force is generated in the coil 36 in a direction that prevents the magnetic flux from changing.
The Lorentz force acts as a driving force of the coil 36 and causes the mirror 33 and the frame member 39 to swing. The current that flows in the coil 36 is, for example, an alternating current whose frequency is about 10 to 100 Hz.

The control circuit 11 controls the current that flows in the coil 36 based on a moving amount detected by the moving amount detecting unit 40. The moving amount detecting unit 40 includes a magnetic sensor such as a Hall IC, detects a moving amount of a predetermined point of the leaf springs 31a and 31b, the mirror 33, or the frame member 39 from the initial state, and outputs the detected moving amount to the control circuit 11.

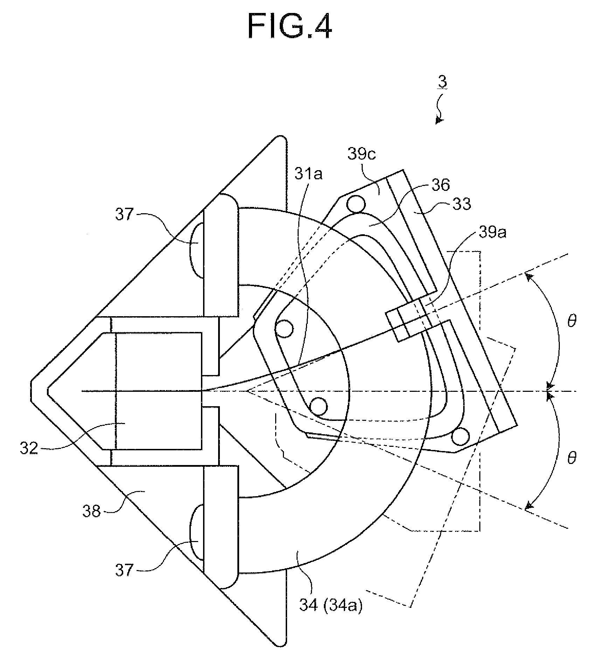

Fig. 4 is a diagram explaining an operation of the optical scanning actuator 3 included in the optical scanning sensor 1 and illustrating an outline of the swinging movement. In Fig. 4, a case in which the leaf spring 31a (31b) is deflected the most and is at one returning position in the swinging movement is denoted by a solid line. As shown in Fig. 4, the mirror 33 and the frame member 39 swing by an angle θ equally in the upward or downward direction in Fig. 4 with respect to the origin position (right or left direction in Fig. 4). When performing swinging, the mirror 33 moves in the neighborhood of outer edges of the arc-shaped portions 34a and 34b of the yoke 34 along the outer edges. For example, when the maximum swinging angle θ of the mirror 33 from the origin position is θ=22.5(°), the mirror 33 swings in the range of 45° around the origin position as a center, and the scanning angle of light emitted from the mirror 33 becomes 90°.

In the optical scanning actuator 3, the opening plane of the coil 36 is approximately parallel to the surfaces of the arc-shaped portions 34a and 34b of the yoke 34 and the magnet 35, and part of the yoke 34 does not pass through the opening plane of the coil 36. Therefore, in the optical scanning actuator 3, even when the frame member 39 is retracted in the direction of the fixing member 32 in a wide angle area in which the value of the swinging angle is large, the coil 36 does not come in contact with the yoke 34. Thus, the optical scanning actuator 3 can accurately perform scanning with light even in the wide angle area, so that there is no fear that the coil 36 or the yoke 34 is damaged.

According to the present embodiment of the present invention explained above, the mirror, which is included in the optical scanning actuator that performs scanning with light, includes the first surface that emits light projected by the light projecting unit to the outside as scanning light and the second surface that is parallel to and is discontinuous in the reflection area with the first surface and reflects the reflection light of the light emitted from the first surface towards the light receiving unit, so that it is possible to provide an optical scanning sensor that is capable of suppressing the mutual interference between scanning light and reflection light and performing an object detection with high accuracy.

Moreover, according to the present embodiment, the first surface and the second surface of the mirror are arranged along a direction orthogonal to a direction in which the mirror swings, so that the mutual interference between scanning light and reflection light can be suppressed more reliably.

Furthermore, according to the present embodiment, the light projecting unit and the light receiving unit are arranged to oppose to the first surface and the second surface of the mirror, respectively, so that it is possible to suppress the mutual interference between scanning light and reflection light from occurring.

Moreover, according to the present embodiment, an object detection can be performed with higher accuracy by providing the mutual interference suppressing unit that suppresses the mutual interference between scanning light and reflection light between the light projecting unit and the light receiving unit.

Furthermore, according to the present embodiment, the coil does not come into contact with the yoke even when the movable unit of the optical scanning actuator is moved in a wide range, so that light scanning can be performed accurately. Therefore, an optical scanning sensor that includes an optical scanning actuator that is capable of realizing widening of the scanning angle of light and is excellent in durability can be provided.

Moreover, according to the present embodiment, because the coil is only arranged in the gap between the magnet and the yoke of the optical scanning actuator, it is possible to have a large assembly tolerance for the coil, resulting in fewer limitations on each shape of the yoke and the coil compared with the configuration in which the yoke passes through the coil, thereby increasing flexibility in designing. Consequently, a configuration of the optical scanning sensor can be simplified, which is easy to assemble to be excellent in productivity and is suitably for size reduction.

Furthermore, according to the present embodiment, only one coil is used in the optical scanning actuator, so that a correcting unit for canceling the unbalance of the driving force need not be provided different from the case of using a plurality of coils, so that the mass of the movable unit can be reduced. Therefore, the mirror can be widely driven with a small driving force, enabling to realize power saving.

Moreover, according to the present embodiment, because the optical scanning actuator is configured without using a motor, noise is not generated at the driving compared with a case of configuring an optical scanning actuator using a motor as in a conventional manner, so that quietness at the operation can be secured. Furthermore, there is no fear that time degradation due to friction occurs as in the case of using a motor, so that the optical scanning actuator is excellent in durability.

The present invention should not be limited to the above embodiment. For example, in the present invention, instead of providing the opening portion between the first surface and the second surface of the mirror, the first surface and the second surface can be separated. In this case, a step may be formed as long as two areas are parallel to each other.

When the first and second surfaces of the mirror are configured to be separated, the light shielding plate can be shaped such that the light shielding plate comes in a space between the first and second surfaces. Whereby, the mutual interference between scanning light and reflection light can be suppressed more reliably. In addition, a weight saving of the optical scanning sensor can be realized by separating the first surface and the second surface.

Moreover, in the present invention, the distance between the light projecting lens and the first surface can be made smaller than the distance between the focusing lens and the second surface. In this case also, the mutual interference between scanning light and reflection light can be suppressed more reliably.

Furthermore, in the optical scanning actuator that is applied to the present invention, the magnet can be attached to the arc-shaped portion positioned on the upper side. Moreover, in the optical scanning actuator, the shape of the leaf spring, the yoke, the magnet, and the coil is not limited to the above. In addition, the configuration can be such that three or more leaf springs are used.

As described above, the present invention can include various embodiments and the like not described here, and various design changes and the like can be made in the range without departing from the technical idea as specified by the claims.

### INDUSTRIAL APPLICABILITY

As described above, the optical scanning sensor according to the present invention is useful for a scanning laser radar apparatus, a laser scanner, a laser printer, a laser marker, an object monitoring apparatus, and the like, and is particularly suitable for a scanning laser radar apparatus.

## Claims

1. An optical scanning sensor comprising:
a light projecting unit that projects light;
an optical scanning actuator that emits the light projected by the light projecting unit via a mirror for reflecting the light and performs scanning with the light emitted by causing the mirror to swing; and
a light receiving unit that receives, via the mirror, reflection light by an external object of scanning light emitted by the optical scanning actuator, wherein
the mirror includes
a first surface that reflects the light projected by the light projecting unit and emits the light reflected outward as the scanning light; and
a second surface that is parallel to and discontinuous in a reflection area with the first surface and reflects and emits the reflection light to the light receiving unit.

2. The optical scanning sensor according to claim 1, wherein the first surface and the second surface are arranged side by side along a direction orthogonal to a direction in which the mirror swings.

3. The optical scanning sensor according to claim 2, wherein the light projecting unit opposes to the first surface and the light receiving unit opposes to the second surface.

4. The optical scanning sensor according to any one of claims 1 to 3, further comprising a mutual interference suppressing unit that is provided between the light projecting unit and the light receiving unit and suppresses a mutual interference between the scanning light and the reflection light.

5. The optical scanning sensor according to any one of claims 1 to 4, wherein the first surface and the second surface are coplanar without a step.

6. The optical scanning sensor according to any one of claims 1 to 5, wherein a distance between the light projecting unit and the first surface is smaller than a distance between the light receiving unit and the second surface.

7. The optical scanning sensor according to any one of claims 1 to 6, wherein
the optical scanning actuator includes
a movable unit that supports the mirror and is movable together with the mirror;
a plurality of leaf springs which has a thin plate shape and of which one end portion in a longitudinal direction is fixed and another end portion in the longitudinal direction is attached to the movable unit; and
an electromagnetic driving unit that includes a magnet that generates a magnetic flux, a yoke that is laminated in part on the magnet and forms a closed magnetic circuit together with the magnet, and a coil that is held by the movable unit, is positioned in a gap between the magnet and the yoke, and includes an opening plane being substantially orthogonal to a laminating direction of the magnet and the yoke, and drives the movable unit by an electromagnetic force applied to the coil.

8. The optical scanning sensor according to claim 7, wherein the coil has a flat shape in which a height in a direction orthogonal to the opening plane is smaller than an arbitrary width in a direction parallel to the opening plane.

9. The optical scanning sensor according to claim 7 or 8, wherein
the yoke includes two arc-shaped portions having two surfaces which are disposed in parallel so as to oppose to each other and have a semi-circular ring shape, and
the mirror is movable in a neighborhood of an outer edge of the arc-shaped portions along the outer edge.

10. The optical scanning sensor according to claim 9, wherein the magnet includes a surface that has a semi-circular ring shape substantially identical to the surfaces of the arc-shaped portions included in the yoke, and is laminated and fixed to a surface of one arc-shaped portion out of the two arc-shaped portions, the surface opposing to another arc-shaped portion.

11. The optical scanning sensor according to any one of claims 7 to 10, wherein
the leaf springs are arranged in parallel, and surfaces thereof that correspond to each other pass through a same plane and longitudinal directions thereof are substantially in parallel with each other in a state where each of the leaf springs is not deflected, and
the magnet, the yoke, and the coil are positioned between any adjacent two leaf springs out of the leaf springs.
